# EUROPEAN PATENT SPECIFICATION

(11) **EP 2 650 207 B1**
(45) Date of publication and mention of the grant of the patent: **17.08.2016**
(21) Application number: 12382142.3
(22) Date of filing: 13.04.2012
(51) Int. Cl.: B63G 8/12, B01D 53/62, B63G 8/36

(54) **WASTE GAS EVACUATOR**
Abgasabsauger
Dispositif d'évacuation de gaz résiduaires

(43) Date of publication of application: 16.10.2013
(73) Proprietor: Sener Ingenieria Y Sistemas, S.A., 48930 Las Arenas - Vizcaya (ES)
(72) Inventor: Llabres Veguillas, Javier, 28224 Pozuelo de Alarcon - Madrid (ES)
(74) Representative: Carvajal y Urquijo, Isabel

(56) References cited:
- DE-A1-102009 051 308
- DE-A1-102010 016 004
- FR-A1- 2 836 983
- JP-A- 4 011 920

## Description

### Field of the invention

This invention consist on a system which is able to completely and effectively dissolve a gas stream composed by mainly CO₂ into sea water at low pressure, in the submarines field of application.

### Background of the invention

Most of the non nuclear submarines use a Diesel energy generator as propulsion method. The generated energy is stored in batteries and these batteries move the propeller. In order to burn the diesel fuel, air is required. Air is taken from the atmosphere, so the submarine cannot be submerged deeply while performing this operation. These submarines have a certain submergence range by stopping the diesel generator and by using the battery until it is run down.

Air Independent Propulsion submarines use propulsion methods that do not require the presence of air. Consequently they can stay submerged and non detectable (silent) for much more time. One of these methods is to use a Hydrogen fuel cell in order to generate the required energy.

This method is satisfactorily used nowadays, but still remains the problem of the hydrogen storage. This Hydrogen is stored in hydride form with metals, contained in big storage vessels. These storage facilities are very heavy and very big, consuming a lot of space and limiting the submarine submergence sailing range.

The hydrogen storage problem can be solved if the hydrogen is generated in situ. In order to perform this task an alcohol reformer could be used in order to produce the required hydrogen flow rate for the hydrogen fuel cell. As a result of the alcohol reforming operation a waste gas stream is produced, which is necessary to be eliminated.

The invention system is able to dissolve into sea water the reformer waste gas, which has been previously treated. The waste gas composition is mainly CO₂ and a small amount of O₂. Exhaust waste gases shall be dissolved into sea water in a proper way in order to avoid bubble formation of non dissolved gases, which will turn the submarine detectable. In order to keep the submarine not detectable (silent), it is required a very small bubble diameter (their diameter must be smaller than 300 µm) and a very small amount of gas bubbles in the outlet water stream. Furthermore this requirement must be achieved at a minimum submergence depth of 15 m. The less submergence depth, the more difficult to dissolve the gas into sea water is.

Furthermore, the waste gas dissolving process must be noise less (essential requirement in a submarine) and must consume the less possible energy, in order to maximize the quantity of the energy generated by the Hydrogen fuel cell towards the propeller movement.

Up to now there are no effective systems that are able to perform the described task with very low energy consumption, noise less, and dissolving the exhaust waste gases into sea water with enough small bubbles to eliminate the submarine signature.

The current invention is able to effectively dissolve the exhaust waste gases with all the above mentioned parameters.

ES2250519 shows a procedure to discrete discharge exhaust waste gases from submarines, which are produced in energy converters, introducing the pressurized exhaust gases in a tube, where circulates sea water. The gas bubbles are broken by static mixers, installed inside the tube. It is achieved the gas dissolution due to high liquid turbulence, characterized by the gas is introduced via a porous media and the tube is feed by pumped sea water with and inlet and an outlet.
1. In ES2250519, water velocity inside the installation is about 1-3 m/s, being much higher than the velocities in the calm down vessel of the current invention, which is aprox. 2 cm/s.
2. In ES2250519, a high mixing rate and high turbulence cannot achieve the complete effective gas dissolution, especially at low submergence depth. If the water-gas mixture is highly mixed and agitated it is favored the bubble nucleation. It is mandatory to calm down the mixture with very slow pass velocity. ES2250519 does only show static mixers, so it is not possible to achieve a very small bubble diameter. ES2250519 mentions bubbles smaller than 3 mm, and the present invention achieves bubbles smaller tan 0.3 mm in the most strength requirements of reduced submergence depth, i.e. 15 m.
3. Bubble diameter obtained through ES2250519 is too big and makes the submarine detectable, while the current invention does not and keeps it silent.

DE 10 2009 051 308 is considered to be the prior art closest to the subject-matter of claim 1 and shows a system to discharge gas from a submarine with a multiphase pump. This mechanical rotating equipment pumps gas and sea water and discharges it through a discharge system.
1. DE 10 2009 051 308 uses a multiphase pump, while the present invention does not require a mechanical rotating equipment. This makes the current invention more robust and a very low maintenance installation (it cannot be broken). Reducing maintenance operations in a submarine is an important point.
2. Additionally, in the current invention, as intermediate rotating mechanical equipment and control valves are not required, the noise produced is much lower compared with DE 10 2009 051 308. Noise is a key factor in submarines.
3. In the other hand, in the current invention, as no intermediate rotating mechanical equipment is required, the energy consumption is really low, only the required to save the friction pressure drop through the current invention system installation. Multiphase pumps consume high amounts of energy. Energy saving is an appreciated feature in a submarine, especially when submerged.
4. DE 10 2009 051308 has a gas separator and a gas recirculation from this separator. Current invention does not have any internal recirculation. A gas recirculation can produce incondensable gas built up and an in-crescendo gas feed to the installation. Current invention is one pass through with water down flow, so gas accumulation does not takes place, even with low water flow rate, gas is not accumulated.
5. In current invention gases are introduced via a perforated distributor, not a porous media like in DE 10 2009 051 308.

### Description of the invention

The invention comprises two apparatus, the reactor-absorber and the calm down vessel. These two apparatus carry out different functions.

The reactor-absorber comprises a vessel where are contacted the gaseous phase containing CO₂ and O₂ with the sea water. Both two phases are put in contact in co-current down flow through a packed bed (random or structured packing). The bed dimension (height and diameter) must be in accordance with the dissolution requirements.

The gas bubbles-sea water mixture from the reactor-absorber is conducted to the calm down vessel, connected in series. This vessel comprises an internal baffle located in the upper part and must give enough contact time to calm down the mixture and achieve the total effective dissolution. Water direction can be down flow. Vessel size (height and diameter) must be in accordance with the dissolution requirements.

With these two apparatus all the above mentioned requirements (in the invention background part) are met.

### Brief description of the drawings

It is briefly described some drawings to better understand the invention. The drawings are related with an execution of the invention, presented as an example, but not limiting it.

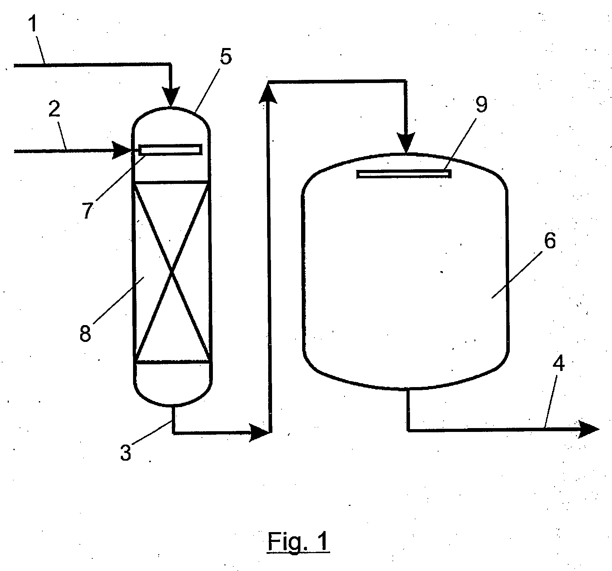

Figure 1 is a process sketch where are shown the different apparatus and streams that take part on the invention.

### Detailed description of an embodiment of the invention

The alcohol reformer produces a gas stream composed mainly by carbon dioxide, CO₂, a small part of Oxygen, O₂ and water saturated. This gas stream must be eliminated.

The operating pressure of the different apparatus of the invention system is the same pressure as the outside sea water pressure, which depends on the submarine submergence depth. If the submarine sails submerged at 15 m, the operating pressure inside the current invention will be 15 m of water column. This is the minimum depth the current invention has to work effectively. With less submergence depth, the snorkel could be used and thus the diesel generator. As the submarine sails deeper, the operating pressure of the system increases in the same way, and more pressure is available to dissolve the exhaust waste gases. With more pressure, it is easier to effectively dissolve the exhaust gases. Thus, the minimum depth of 15 m will be the design requirement for effectively dissolve the exhaust waste gas, as with more submergence depth it is easier.

Sea water is being taken from the submarine surrounding sea water at a certain pressure, which depends on the submergence depth. Sea water is pumped in enough quantity in order to refrigerate submarine machinery, then it is conducted to the current invention sea water inlet for gas effective dissolution. When gases are dissolved into sea water, it is returned back to the sea in a geometrically different position where it was taken, at the same pressure. The sea water used for gas dissolving purposes is the cooling water of the cooling water system of the submarine, so the additional energy consumption in the circulating cooling pump is only the required to save the friction pressure drop through the current invention system installation. The fact of operating at the same sailing depth pressure, has the great advantage of always consuming the same extra pumping low energy quantity, that corresponds with the friction pressure drop through the invention installation, because the inlet and outlet pressures are the same, that correspond with the working depth.

The current invention is able to perform the effective dissolution (almost all gas is dissolved, only a small quantity of gas bubbles with a diameter smaller than 300µm is present) with low working pressure (15 m of depth or 1.5 barg) and consequently also at high submergence depth (with more depth, the easier to dissolve the gasses) with the two apparatus connected in series.

This two apparatus are the reactor-absorber (5) and the calm down vessel (6). Different functions are carried out in each one of them. In the first one (5), the contact between gas and sea water is carried out by generating the proper phase contact. In the second one (6) the mixing operation is calm down to generate the final absorption in a slow and calm way.

The reactor-absorber (5) is a vertical vessel which has the following inlets and outlets:
1) Sea water (1) enters through the top part of the vessel, being pumped from the sea, at a pressure corresponding with the submarine working submergence depth.
2) Exhaust waste gas (2) from reformer to be dissolved enters through the vessel top part. The gas inlet pressure is also the sea water working pressure. The gas is introduced via a gas distributor (7) in a way that the gas is distributed in a homogeneous way through the whole vessel transversal section. This distributor (7) can be constituted by a perforated grate with small orifices.
3) The sea water with absorbed gas and some amount of bubbles mixture (3) . leaves the vessel through the bottom part. This mixture stream (3) is conducted to the next apparatus in the invention, the calm down vessel (6).

The reactor-absorber (5) has a packing bed (8) located inside the vessel which provides contact surface and enough mixing requirements to mix in the proper way the gas and the sea water. Gaseous and liquid phases are put in contact both with the same direction (co-current) and down flow. The packing bed size (type of packing, height and diameter) must comply with the dissolution requirements. In this packing bed (8) the major part of the gas dissolution and almost all the chemical reactions extent, generating carbonates and bi-carbonates take place.

The calm down vessel (6) is a vessel with no packing bed, which achieves reducing the final bubble size of the not dissolved gas bubbles from stream (3) from the reactor-absorber (5).

This vessel has the following inlets and outlets:
1) The feed stream is entering the vessel into the upper part. This stream consists on sea water with gas bubbles inside that constitute a mixture (3). The stream is conducted from the reactor-absorber (5).
2) The outlet stream (4) is obtained from the bottom part of the vessel. This stream (4) has de gas dissolved into the sea water with no appreciable bubbles, thus being the effective gas dissolution performed. The outlet stream (4) is returned back into the sea at the same pressure the sea water has being taken, corresponding with the working sailing submerged depth.

The calm down vessel (6) can contain a distribution baffle (9) located in the upper part. This baffle achieves a homogeneous distribution along the whole vessel transversal area:
The mixture (3) has a down-flow flow pattern along the calm down vessel (6). As the inlet mixture (3) is entering the vessel (6) in the upper part, there is no possible gas accumulation in high points. The calm down vessel (6) must have a big diameter in order to have a water pass velocity of approximately 2 cm/s or less.

An execution of this invention is referred to a reformer exhaust waste gas evacuator which has:
1a) an exhaust waste gas inlet (2) to the system configured to receive exhaust waste gases (2) from a reformer;
1 b) a solvent or dissolution means inlet (1) to the system configured to receive the dissolution means (1);
1c) an outlet (4) from the evacuation system configured to reject the dissolution with the gases dissolved in;
The gas evacuator comprises:
1d) a reactor-absorber (5) configured to put in contact waste gases (2) with a solvent or dissolution means (1), comprising the reactor absorber (5):
   1d1) a slim vessel configured to allow a pass velocity for the solvent or dissolution means (1) between 20 and 50 cm/s;
   1d2) a first inlet to the vessel which is the waste gas inlet (2) to the evacuator;
   1d3) a distributor (7) of waste gas (2) inside the vessel;
   1d4) a second inlet to the vessel which is the solvent or dissolution means inlet (1) to the evacuator;
   1d5) an outlet from the vessel configured to reject the mixture (3) of the solvent or the dissolution means (3) and the waste gas (2);
   1d6) a packing bed (8) inside the vessel;
1e) a calm down vessel (6) located downstream the reactor absorber (5), configured to obtain an effective dissolution, comprising the calm down vessel (6):
   1e1) a vessel configured to allow a near laminar flow regime for the solvent or the dissolution means (1) and a residence time of at least 100 seconds;
   1e2) an inlet of the mixture (3) coming from the reactor-absorber (5) to the vessel;
   1e3) an outlet (4) from the vessel which is the dissolution outlet which comprises the dissolved gases into the dissolution means from the evacuator.
Satisfying other invention characteristics:
2. The exhaust waste gas inlet (2), the solvent or the dissolution means inlet (1), the distributor (7) and the vessel are configured to put in contact the gas stream (2) with the solvent or dissolution means liquid stream (1) in co-current. The distributor (7) could be a perforated grate with small orifices.
3. The reactor-absorber (5) is configured to generate a down flow direction of the waste gases (2) and the solvent or dissolution means (1).
4. The reactor-absorber (5) is configured to obtain a flow pattern of the waste gases (2) and the solvent or dissolution means (1) by gravity.
5. The reactor absorber (5) is configured to generate a first flow direction for the solvent or dissolution means (1) and a second flow direction for the waste gases (2) being in counter-current with the solvent or dissolution means (1). In an execution mode with the solvent or dissolution means (1) and the waste gas (2) flow directions in counter-current, the gas is entering to the vessel from the bottom part and the solvent or dissolution means from the top part. In this case the down flow solvent or dissolution means velocity is slow in order to avoid gas dragging, but dissolution is very effective.
6. The packing bed (8) is random packing.
7. The packing (8) is structured packing.
8. The evacuation system comprises a distribution baffle (9) for the incoming mixture (3) located inside the calm down vessel (6).
9. The baffle (9) is located inside the calm down vessel (6) in a position that allows an adequate contact time to calm down the mixture (3) and achieve a total waste gas (2) dissolution into the solvent or dissolution means (1).
10. The baffle (9) is located in the upper part of the calm down vessel (6).
11. The calm down vessel (6) is configured to generate a down flow pattern for the mixture stream (3).
12. The calm down vessel (6) is configured to obtain a gravity flow pattern for the mixture stream (3).
13. Exhaust waste gas (2) comprises a gaseous phase with CO₂ and O₂.
14. The inlet of the solvent or dissolution means (1) to the evacuator is configured to receive the solvent or the dissolution means (1) from a cooling system.
15. The solvent or the dissolution means (1) are water.
16. The water is sea water.
17. The waste gas (2) distributor (7) is a perforated grate with small orifices.

## Claims

1. A submarine comprising a waste gas evacuation system for gases produced in a reformer of said submarine, the waste gas evacuation system having:
1a) an exhaust waste gas inlet (2) to the evacuation system configured to receive exhaust waste gases (2) from a reformer;
1b) a dissolution means inlet (1) to the evacuation system configured to receive the dissolution means (1);
1c) an outlet (4) from the evacuation system configured to reject the dissolution with the gases dissolved in;
**characterized in that** the waste gas evacuation system comprises:
1d) a reactor-absorber (5) configured to put in contact waste gases (2) with dissolution means (1), the reactor absorber (5) comprising:
1d1) a slim vessel configured to allow a pass velocity for the dissolution means (1) between 20 and 50 cm/s;
1d2) a first inlet to the vessel which is the waste gas inlet (2) to the evacuation system;
1d3) a distributor (7) of waste gas (2) inside the vessel;
1d4) a second inlet to the vessel which is the dissolution means inlet (1) to the evacuation system;
1d5) a outlet from the vessel configured to reject the mixture (3) of the dissolution means (3) and the waste gas (2);
1d6) a packing bed (8) inside the vessel, said packing bed being random or structured;
1e) a calm down vessel (6) located downstream the reactor absorber (5), configured to obtain an effective dissolution, the calm down vessel (6) comprising:
1e1) a vessel configured to allow a near laminar flow regime for the dissolution means (1) and a residence time of at least 100 seconds;
1e2) an inlet of the mixture (3) coming from the reactor-absorber (5) to the vessel;
1e3) an outlet (4) from the vessel which is the dissolution outlet which comprises the dissolved gases into the dissolution means from the evacuator.

2. The submarine comprising a waste gas evacuator of claim 1 **characterized in that** the exhaust waste gas inlet (2), the dissolution means inlet (1), the distributor (7) and the vessel are configured to put in contact the gas stream (2) with the dissolution means liquid stream (1) in co-current.

3. The submarine comprising a waste gas evacuator of claim 2 **characterized in that** the reactor-absorber (5) is configured to generate a direction of both waste gas (2) and dissolution means (1) is down flow.

4. The submarine comprising a waste gas evacuator of claim 2 **characterized in that** the reactor-absorber (5) is configured to generate a gravity flow of both waste gas (2) and dissolution means (1).

5. The submarine comprising a waste gas evacuator of claim 2 **characterized in that** the reactor absorber (5) is configured to generate a first flow direction for the dissolution means (1) and a second flow direction for the waste gases (2) being in counter-current with the dissolution means (1).

6. The submarine comprising a waste gas evacuator of any of claims 1-5 **characterized in that** the packing bed (8) is random packing type.

7. The submarine comprising a waste gas evacuator of any of claims 1-5 **characterized in that** the packing bed (8) is structured packing type.

8. The submarine comprising a waste gas evacuator of any of claims 1-7 **characterized in that** a internal baffle (9) for the incoming mixture (3) inside the calm down vessel (6).

9. The submarine comprising a waste gas evacuator of claim 8 **characterized in that** the baffle (9) is located inside the calm down vessel (6) in a position that allows an adequate contact time to calm down the mixture (3) and achieve a total waste gas (2) dissolution into the dissolution means (1).

10. The submarine comprising a waste gas evacuator of any of claims 8-9 **characterized in that** the baffle (9) is located in the upper part of the calm down vessel (6).

11. The submarine comprising a waste gas evacuator of any of claims 1-10 **characterized in that** the calm down vessel (6) is configured to generate a down flow pattern for the mixture stream (3).

12. The submarine comprising a waste gas evacuator of any of claims 1-11 **characterized in that** the calm down vessel (6) is configured to obtain a gravity flow pattern for the mixture stream (3).

13. The submarine comprising a waste gas evacuator of any of claims 1-12 **characterized in that** the exhaust waste gas (2) comprises a gaseous phase with CO₂ and O₂.

14. The submarine comprising a waste gas evacuator of any of claims 1-13 **characterized in that** the inlet of the dissolution means (1) to the evacuator is configured to receive dissolution means (1) from a cooling system.

15. The submarine comprising a waste gas evacuator of any of claims 1-14 **characterized in that** the dissolution means (1) are water.

16. The submarine comprising a waste gas evacuator of claim 15 **characterized in that** water is sea water.

17. The submarine comprising a waste gas evacuator of any of claims 1-16 **characterized in that** the waste gas (2) distributor (7) is a perforated grate with small orifices.

## Patentansprüche

1. U-Boot umfassend ein Abgasabsaugsystem für in einem Reformer des genannten U-Boots erzeugte Gase, wobei das Abgasabsaugsystem Folgendes aufweist:
1a) einen Abgaseinlass (2) zum Absaugsystem, welcher dazu ausgebildet ist, Abgase (2) aus einem Reformer zu erhalten;
1b) einen Lösemitteleinlass (1) zum Absaugsystem, welcher dazu ausgebildet ist, die Lösemittel (1) zu erhalten;
1c) einen Auslass (4) aus dem Absaugsystem, welcher dazu ausgebildet ist, die Lösung mit den Gasen darin gelöst abzuführen;
**dadurch gekennzeichnet, dass** das Abgasabsaugsystem Folgendes umfasst:
1d) einen Absorber-Reaktor (5), welcher dazu ausgebildet ist, Abgase (2) mit Lösemitteln (1) in Kontakt zu bringen, wobei der Absorber-Reaktor (5) Folgendes umfasst:
1d1) einen schmalen Behälter, welcher dazu ausgebildet ist, eine Durchgangsgeschwindigkeit für die Lösemittel (1) zwischen 20 und 50 cm/s zu ermöglichen;
1d2) einen ersten Einlass zum Behälter, welcher der Abgaseinlass (2) zum Absaugsystem ist;
1d3) einen Verteiler (7) von Abgas (2) innerhalb des Behälters;
1d4) einen zweiten Einlass zum Behälter, welcher der Lösemitteleinlass (1) zum Absaugsystem ist;
1d5) einen Auslass aus dem Behälter, welcher dazu ausgebildet ist, die Mischung (3) der Lösemittel (3) und des Abgases (2) abzuführen;
1d6) ein Schüttbett (8) innerhalb des Behälters, wobei das genannte Schüttbett willkürlich oder strukturiert ist;
1e) einen Beruhigungsbehälter (6), welcher sich stromabwärts des Absorber-Reaktors (5) befindet und dazu ausgebildet ist, eine wirksame Lösung zu erzielen, wobei der Beruhigungsbehälter (6) Folgendes umfasst:
1e1) einen Behälter, welcher dazu ausgebildet ist, ein nahezu laminares Strömungsregime für die Lösemittel (1) und eine Verweilzeit von mindestens 100 Sekunden zu ermöglichen;
1e2) einen Einlass für die Mischung (3), welche aus dem Absorber-Reaktor (5) stammt, zum Behälter;
1e3) einen Auslass (4) aus dem Behälter, welcher der Lösemittelauslass ist, welcher die gelösten Gase in die Lösemittel aus dem Absauger einschließt.

2. U-Boot umfassend einen Abgasabsauger nach Anspruch 1, **dadurch gekennzeichnet, dass** der Abgaseinlass (2), der Lösemitteleinlass (1), der Verteiler (7) und der Behälter dazu ausgebildet sind, die Gasströmung (2) mit der flüssigen Lösemittelströmung (1) unter Gleichströmung in Kontakt zu bringen.

3. U-Boot umfassend einen Abgasabsauger nach Anspruch 2, **dadurch gekennzeichnet, dass** der Absorber-Reaktor (5) dazu ausgebildet ist, eine Richtung sowohl vom Abgas (2) als auch von den Lösemitteln (1) in Abwärtsströmung zu erzeugen.

4. U-Boot umfassend einen Abgasabsauger nach Anspruch 2, **dadurch gekennzeichnet, dass** der Absorber-Reaktor (5) dazu ausgebildet ist, eine Schwerkraftströmung sowohl von Abgas (2) als auch von Lösemitteln (1) zu erzeugen.

5. U-Boot umfassend einen Abgasabsauger nach Anspruch 2, **dadurch gekennzeichnet, dass** der Absorber-Reaktor (5) dazu ausgebildet ist, eine erste Strömungsrichtung für die Lösemittel (1) und eine zweite Strömungsrichtung für die Abgase (2), welche unter Gegenströmung mit den Lösemitteln (1) strömen, zu erzeugen.

6. U-Boot umfassend einen Abgasabsauger nach einem der Ansprüche 1-5, **dadurch gekennzeichnet, dass** das Schüttbett (8) vom willkürlichen Schütt-Typ ist.

7. U-Boot umfassend einen Abgasabsauger nach einem der Ansprüche 1-5, **dadurch gekennzeichnet, dass** das Schüttbett (8) vom strukturierten Schütt-Typ ist.

8. U-Boot umfassend einen Abgasabsauger nach einem der Ansprüche 1-7, **dadurch gekennzeichnet, dass** es eine innere Ablenkplatte (9) für die eingehende Mischung (3) innerhalb des Beruhigungsbehälters (6) umfasst.

9. U-Boot umfassend einen Abgasabsauger nach Anspruch 8, **dadurch gekennzeichnet, dass** sich die Ablenkplatte (9) innerhalb des Beruhigungsbehälters (6) in einer Position befindet, welche eine hinreichende Kontaktzeit ermöglicht, um die Mischung (3) zu beruhigen und eine vollständige Lösung des Abgases (2) in die Lösemittel (1) zu erreichen.

10. U-Boot umfassend einen Abgasabsauger nach einem der Ansprüche 8-9, **dadurch gekennzeichnet, dass** sich die Ablenkplatte (9) im oberen Teil des Beruhigungsbehälters (6) befindet.

11. U-Boot umfassend einen Abgasabsauger nach einem der Ansprüche 1-10, **dadurch gekennzeichnet, dass** der Beruhigungsbehälter (6) dazu ausgebildet ist, ein Abwärtsströmungsmuster für die Mischungsströmung (3) zu erzeugen.

12. U-Boot umfassend einen Abgasabsauger nach einem der Ansprüche 1-11, **dadurch gekennzeichnet, dass** der Beruhigungsbehälter (6) dazu ausgebildet ist, ein Schwerkraftströmungsmuster für die Mischungsströmung (3) zu erzielen.

13. U-Boot umfassend einen Abgasabsauger nach einem der Ansprüche 1-12, **dadurch gekennzeichnet, dass** das Abgas (2) eine gasförmige Phase mit CO₂ und O₂ umfasst.

14. U-Boot umfassend einen Abgasabsauger nach einem der Ansprüche 1-13, **dadurch gekennzeichnet, dass** der Einlass der Lösemittel (1) zum Absauger dazu ausgebildet ist, Lösemittel (1) aus einem Kühlsystem zu erhalten.

15. U-Boot umfassend einen Abgasabsauger nach einem der Ansprüche 1-14, **dadurch gekennzeichnet, dass** die Lösemittel (1) Wasser sind.

16. U-Boot umfassend einen Abgasabsauger nach Anspruch 15, **dadurch gekennzeichnet, dass** das Wasser Meerwasser ist.

17. U-Boot umfassend einen Abgasabsauger nach einem der Ansprüche 1-16, **dadurch gekennzeichnet, dass** der Verteiler (7) von Abgas (2) ein durchlochtes Gitter mit kleinen Öffnungen ist.

## Revendications

1. Sous-marin comprenant un système d'évacuation de gaz résiduaires pour des gaz produits dans une unité de reformage dudit sous-marin, le système d'évacuation de gaz résiduaires ayant :
1a) une entrée des gaz résiduaires d'échappement (2) au système d'évacuation configurée pour recevoir des gaz résiduaires d'échappement (2) provenant d'une unité de reformage ;
1b) une entrée des moyens de dissolution (1) au système d'évacuation configurée pour recevoir les moyens de dissolution (1) ;
1c) une sortie (4) du système d'évacuation configurée pour rejeter la dissolution avec les gaz dissouts dans celle-ci,
caractérisé en que le système d'évacuation de gaz résiduaires comprend :
1d) un réacteur-absorbeur (5) configuré pour mettre en contact les gaz résiduaires (2) avec les moyens de dissolution (1), le réacteur-absorbeur (5) comprenant :
1d1) un récipient mince configuré pour permettre une vitesse de passage pour les moyens de dissolution (1) d'entre 20 et 50 cm/s ;
1d2) une première entrée au récipient qui est l'entrée des gaz résiduaires (2) au système d'évacuation ;
1d3) un distributeur (7) des gaz résiduaires (2) à l'intérieur du récipient ;
1d4) une deuxième entrée au récipient qui est l'entrée des moyens de dissolution (1) au système d'évacuation ;
1d5) une sortie du récipient configurée pour rejeter le mélange (3) des moyens de dissolution (3) et les gaz résiduaires (2) ;
1d6) un lit de remplissage (8) à l'intérieur du récipient, ledit lit de remplissage étant aléatoire ou structuré ;
1e) un récipient de repos (6) situé en aval du réacteur-absorbeur (5), configuré pour obtenir une dissolution effective, le récipient de repos (6) comprenant :
1e1) un récipient configuré pour permettre un régime d'écoulement quasi laminaire pour les moyens de dissolution (1) et un temps de séjours d'au moins 100 secondes ;
1e2) une entrée du mélange (3) provenant du réacteur-absorbeur (5) au récipient ;
1e3) une sortie (4) du récipient qui est la sortie de dissolution qui comprend les gaz dissouts dans les moyens de dissolution du dispositif d'évacuation.

2. Sous-marin comprenant un dispositif d'évacuation de gaz résiduaires selon la revendication 1, **caractérisé en ce que** l'entré des gaz résiduaires d'échappement (2), l'entrée des moyens de dissolution (1), le distributeur (7) et le récipient sont configurés pour mettre en contact le courant gazeux (2) avec le courant liquide des moyens de dissolution (1) à co-courant.

3. Sous-marin comprenant un dispositif d'évacuation de gaz résiduaires selon la revendication 2, **caractérisé en ce que** le réacteur-absorbeur (5) est configuré pour générer une direction aussi bien des gaz résiduaires (2) que des moyens de dissolution (1) qui est en écoulement descendant.

4. Sous-marin comprenant un dispositif d'évacuation de gaz résiduaires selon la revendication 2, **caractérisé en ce que** le réacteur-absorbeur est configuré pour générer un écoulement par gravité aussi bien des gaz résiduaires (2) que des moyens de dissolution (1).

5. Sous-marin comprenant un dispositif d'évacuation de gaz résiduaires selon la revendication 2, **caractérisé en ce que** le réacteur-absorbeur (5) est configuré pour générer une première direction d'écoulement pour les moyens de dissolution (1) et une deuxième direction d'écoulement pour les gaz résiduaires (2) allant à contre-courant des moyens de dissolution (1).

6. Sous-marin comprenant un dispositif d'évacuation de gaz résiduaires selon l'une quelconque des revendications 1-5, **caractérisé en ce que** le lit de remplissage (8) est du type à remplissage aléatoire.

7. Sous-marin comprenant un dispositif d'évacuation de gaz résiduaires selon l'une quelconque des revendications 1-5, **caractérisé en ce que** le lit de remplissage (8) est du type à remplissage structuré.

8. Sous-marin comprenant un dispositif d'évacuation de gaz résiduaires selon l'une quelconque des revendications 1-7, **caractérisé par** un déflecteur interne (9) pour le mélange entrant (3) à l'intérieur du récipient de repos (6).

9. Sous-marin comprenant un dispositif d'évacuation de gaz résiduaires selon la revendication 8, **caractérisé en ce que** le déflecteur (9) est situé à l'intérieur du récipient de repos (6) dans une position permettant un temps de contact approprié pour faire reposer le mélange (3) et obtenir une dissolution totale des gaz résiduaires (2) dans les moyens de dissolution (1).

10. Sous-marin comprenant un dispositif d'évacuation de gaz résiduaires selon l'une quelconque des revendications 8-9, **caractérisé en ce que** le déflecteur (9) est situé sur la partie supérieure du récipient de repos (6).

11. Sous-marin comprenant un dispositif d'évacuation de gaz résiduaires selon l'une quelconque des revendications 1-10, **caractérisé en ce que** le récipient de repos (6) est configuré pour générer un patron d'écoulement descendant pour le courant de mélange (3).

12. Sous-marin comprenant un dispositif d'évacuation de gaz résiduaires selon l'une quelconque des revendications 1-11, **caractérisé en ce que** le récipient de repos (6) est configuré pour obtenir un patron d'écoulement par gravité pour le courant de mélange (3).

13. Sous-marin comprenant un dispositif d'évacuation de gaz résiduaires selon l'une quelconque des revendications 1-12, **caractérisé en ce que** les gaz résiduaires d'échappement (2) comprennent une phase gazeuse avec du CO₂ et de l'O₂.

14. Sous-marin comprenant un dispositif d'évacuation de gaz résiduaires selon l'une quelconque des revendications 1-13, **caractérisé en ce que** l'entrée des moyens de dissolution (1) au dispositif d'évacuation est configurée pour recevoir des moyens de dissolution (1) provenant d'un système de refroidissement.

15. Sous-marin comprenant un dispositif d'évacuation de gaz résiduaires selon l'une quelconque des revendications 1-14, **caractérisé en ce que** les moyens de dissolution (1) sont de l'eau.

16. Sous-marin comprenant un dispositif d'évacuation de gaz résiduaires selon la revendication 15, **caractérisé en ce que** l'eau est de l'eau de mer.

17. Sous-marin comprenant un dispositif d'évacuation de gaz résiduaires selon l'une quelconque des revendications 1-16, **caractérisé en ce que** le distributeur (7) des gaz résiduaires (2) est une grille perforée avec des petits orifices.
